# EUROPEAN PATENT SPECIFICATION

(11) **EP 4 363 324 B1**
(45) Date of publication and mention of the grant of the patent: **15.01.2025**
(21) Application number: 23735599.5
(22) Date of filing: 20.06.2023
(51) Int. Cl.: B64G 1/50, F28D 7/00, B33Y 80/00, F28D 15/02, F28D 15/04, F28F 3/12, F28F 13/18

(54) **IMPROVED SYSTEM FOR THERMAL REGULATION OF A SPACECRAFT**
VERBESSERTES SYSTEM ZUR THERMISCHEN REGELUNG EINES RAUMFAHRZEUGES
SYSTÈME AMÉLIORÉ DE RÉGULATION THERMIQUE D'UN ENGIN SPATIAL

(30) Priority: 01.07.2022 EP 22305986
(43) Date of publication of application: 08.05.2024
(73) Proprietor: Airbus Defence and Space SAS, 31402 Toulouse Cedex 4 (FR); Airbus Defence and Space GmbH, 82024 Taufkirchen (DE)
(72) Inventor: COQUARD, Typhaine, 31402 TOULOUSE CEDEX 4 (FR); MANCIO REIS, Filipe, 31402 TOULOUSE CEDEX 4 (FR); MOSSEVELD, Dean, 31402 TOULOUSE CEDEX 4 (FR)
(74) Representative: Plasseraud IP
(86) International application number: PCT/EP2023/066532
(87) International publication number: WO 2024/002772

(56) References cited:
- WO-A1-2021/110052
- GB-A- 2 501 413
- US-A1- 2004 040 691
- US-A1- 2021 247 140
- US-B1- 11 333 445

## Description

### TECHNICAL FIELD

The present disclosure relates to a system for thermal regulation of a spacecraft, and a spacecraft comprising such system.

### STATE OF THE ART

A spacecraft usually carries a payload comprising electronic devices dedicated to perform various functionalities such as measurements, controls, communication etc. These electronic devices produce heat which must be dissipated in order to prevent excessive heating and degradation of the devices.

It is conventional to achieve the rejection of the heat produced by the payload of the spacecraft by radiation to the deep space. To this end, a conventional thermal regulation system can comprise a radiator of a spacecraft, and a fluid circuit in which a cooling fluid circulates, the fluid circuit being arranged to collect heat from one or several heat-producing component(s) and to bring the collected heat to the radiator. The fluid circuit may comprise a pump for circulating the cooling fluid.

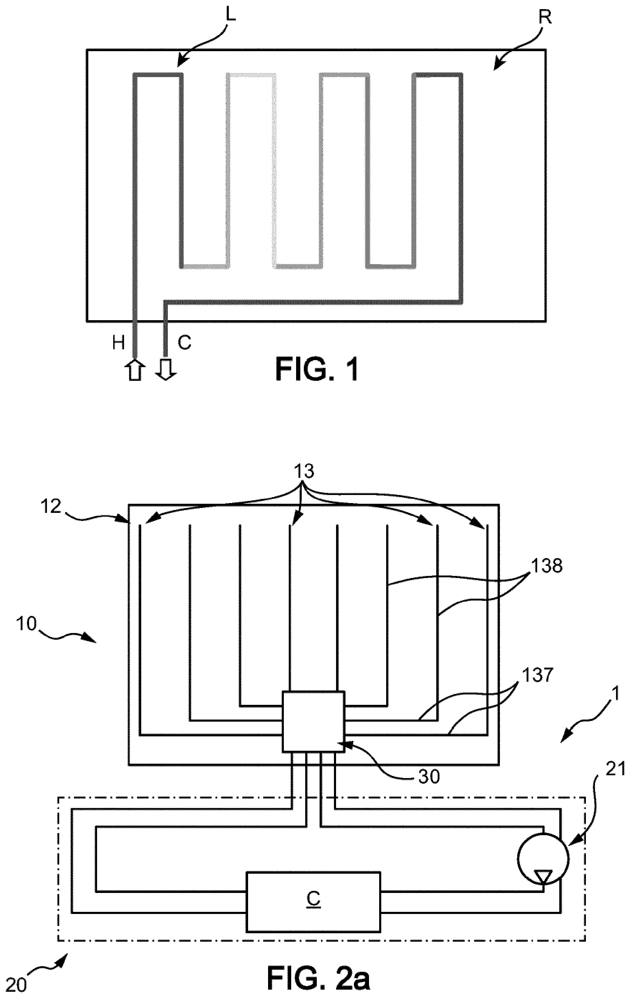

With reference to figure 1 is schematically shown a conventional design or a radiator R along which extends a line L of the fluid circuit comprising the cooling fluid. The cooling fluid circulates within the cooling line and enters at a relatively high temperature H and exits at a cooler temperature C. Conventionally, a single cooling line is embedded or mounted at the surface of the radiator, according to a pattern that covers the whole surface of the radiator. As the cooling line is in thermal contact with the radiator, this pattern increases the surface of thermal exchange between the cooling line and the radiator, and improves the cooling. However, such pattern also leads to a significant surface of the cooling line being exposed to the external environment, increasing the risk of being hit by micrometeoroid and debris, and lowering the overall reliability and service life of the cooling system, rendering it improper for very long missions.

It is also known from FR 2 972 714 another system for thermal regulation of a spacecraft, comprising a structural panel of a satellite having an outer skin that is configured to radiate heat and an inner skin on which are mounted a plurality of heat-generating components. The system for thermal regulation further comprises a cooling circuit comprising an evaporator line running along the inner skin of the panel, and configured to receive heat from the heat-generating components, and a plurality of condensers on the outer skin of the panel, each condenser transferring heat to the outer skin of the panel via a respective heat pipe with which it is in thermal contact.

The system actually comprises two parallel lines of condensers, the two parallel lines being in fluid communication, such that a damage caused by a debris or a micrometeoroid on one condenser or one conduit linking two adjacent condensers may result in a leakage of the whole line, and failure of the whole thermal regulation device.

In this regard, document FR 2 972 714 further teaches to protect the condensers from micrometeoroids by hardening the walls of the condensers and of the conduits linking adjacent condensers.

This system is however complex and costly due to the complexity of the cooling fluid circuit and the important number of condensers. Document US 2021/247140 A1 discloses another prior art system in which a first inner channel and second inner channel are isolated from each other and wherein each of first inner channel and second inner channel contacts both first conductive wall and second conductive wall.

### PRESENTATION OF THE INVENTION

In view of the above, the present disclosure aims at providing a system for thermal regulation of a spacecraft that reduces the risks caused by debris of micrometeoroids on operation of the system.

Another aim of the present disclosure is to provide a system that is cheaper and of simpler design that the prior art.

Accordingly, a system for thermal regulation of a spacecraft is disclosed, comprising:
- a hot source interface,
- a radiator having a thermally conductive body comprising at least one radiative surface,
- two separate single-phase cooling fluid circuits (20) arranged in or on said hot source interface, each single-phase cooling circuit comprising a pump for activating the circulation of the single-phase cooling fluid,

the system further comprising a heat exchange device arranged in or on the body of the radiator, the heat exchange device comprising a casing comprising at least two internal cavities each having input and output ports for separately connecting each of said single-phase cooling fluid circuit to the heat exchange device,
and wherein the heat exchange device (30) comprises a plurality of thermal interfaces with a plurality of diphasic ducts (13), the diphasic ducts being separate from each other and separate from the single-phase cooling fluid circuits (20), the diphasic ducts (13) being arranged around the heat exchange device (30), each diphasic duct extending at least from a first section (135) of said diphasic duct to a second section (136) of said diphasic duct, said first (135) section being arranged on one of said thermal interfaces of the heat exchange device and said second section (136) of said diphasic duct being arranged in or on said body of said radiator (10), the second sections of the diphasic ducts extending around the heat exchange device.

In embodiments, the first section of each diphasic duct extends along a direction transverse to the direction of said single-phase cooling fluid circuit in the internal cavities and the internal cavities are shaped such that the cooling fluid circulating within the cavities circulates around at least part of the circumference of each duct section.

In embodiments, the first sections of the diphasic ducts comprise at least two superposed layers of first duct sections, wherein the first duct sections of a layer are offset relative to the duct sections of an adjacent layer, and the internal cavities circulate between the first duct sections of two adjacent layers.

In embodiments, the first diphasic ducts sections extend parallel to each other, and the second duct sections extend in different directions in a plane parallel to the radiative surface.

In embodiments, each of said internal cavities comprises an internal lattice structure disposed transversally to an internal circuit joining said input and output ports and linked to said thermal interfaces.

In embodiments, the internal cavities are formed by walls of a thermally conductive material, and the internal lattice is formed of a thermally conductive material.

In embodiments, the first diphasic duct section of each diphasic duct forms an end of the diphasic duct.

In embodiments, the casing comprising the cavities and the first diphasic duct sections is formed as a single piece manufactured by additive manufacturing, and each first duct section is assembled to a second duct section extending from the casing.

In embodiments, each first diphasic dust section protrudes from a wall of the casing delimiting the internal cavities, and is assembled to a second diphasic duct section in order to form a respective diphasic duct, said assembly being achieved by welding, brazing, or by a shape-memory fitting.

In embodiments, the casing comprises a plurality of open grooves configured to receive a corresponding first diphasic duct section.

In embodiments, each first diphasic duct section is inserted in a corresponding open groove and assembled to it by thermal glue, welding or brazing.

In embodiments, each first diphasic duct section has the same thermal exchange surface with both internal cavities.

In embodiments, the system comprises two casings each comprising one of the internal cavities, each casing comprising a plurality of open grooves configured each to receive a corresponding first diphasic duct section, and the two casings are assembled together with the open grooves of a casing facing the open grooves of the other casing.

In embodiments, each diphasic duct comprises at least one internal canal for vapor circulation and a capillary structure for liquid circulation.

According to another aspect, it is disclosed a spacecraft comprising at least one heat-producing component and a system for thermal regulation according to the above description.

The system according to the present disclosure comprises a single heat exchange device assembled to the body of a radiator of the spacecraft, the heat exchange device comprising a body having an internal cavity for circulation of a single-phase cooling fluid, and a section of each diphasic duct running along the surface of the radiator, each section being in thermal contact with the internal cavity.

The design of the system is simple since it does not rely on a phase-changing cooling fluid.

Moreover, the heat exchange device may distribute heat of the cooling fluid to a plurality of independent diphasic ducts, running along the surface of the radiator. Thus, as the distribution of heat produced by the spacecraft components is distributed to the diphasic ducts by means of a single and compact heat exchange device, the probability of such device being hit by a debris or micrometeoroid and causing failure of the system is reduced.

When the internal cavities comprise an internal lattice structure, the liquid is slowed down and the thermal conductivity with the diphasic ducts is enhanced.

### DESCRIPTION OF THE DRAWINGS

Other features and advantages of the invention will be apparent from the following detailed description given by way of non-limiting example, with reference to the accompanying drawings, in which:
- Figure 1, already discussed, schematically represents an example of a spacecraft radiator according to the prior art,
- Figure 2a schematically represents an example of a system for thermal regulation of a spacecraft according to an embodiment,
- Figure 2b schematically represents an alternative configuration of a radiator on which a heat exchange device is mounted,
- Figure 3a and 3b respectively show an external and internal view of a heat exchange device according to a first embodiment,
- Figure 4 shows an external view of a heat exchange device according to a second embodiment,
- Figure 5 shows an external view of a heat exchange device according to a third embodiment.
- Figure 6 shows an exemplary cross section of a heat-pipe.
- Figure 7 schematically represents an example of a spacecraft comprising a system for thermal regulation according to an embodiment.

### DETAILED DESCRIPTION OF AT LEAST ONE EMBODIMENT

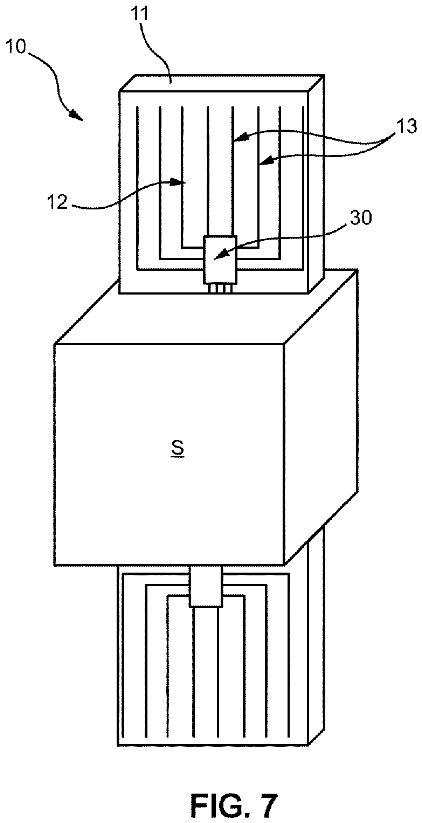

With reference to the appended figures, a system for thermal regulation of a spacecraft will now be described. With reference to figure 7, the spacecraft S may be a satellite, for instance a LEO, MEO or GEO satellite, including a so-called nanosatellite, minisatellite or any other constellation platform. Alternatively, the spacecraft may also be a space station or a probe embarking instruments.

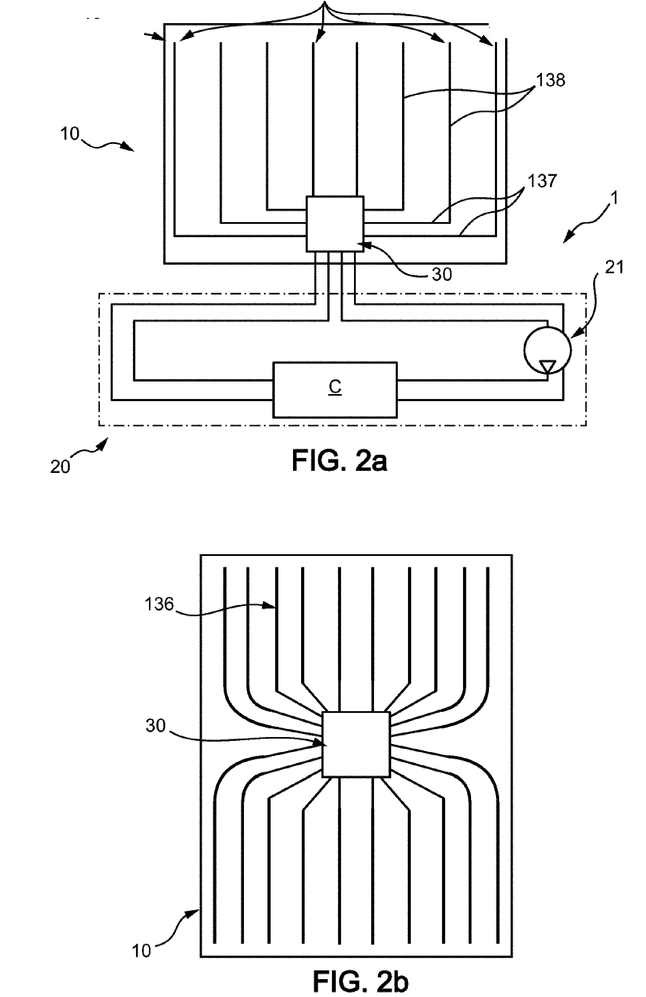

With reference to figure 2a, the system 1 for thermal regulation of a spacecraft comprises at least one radiator 10, having a thermally conductive body 11 comprising at least one radiative surface 12. The thermally conductive body may be formed in metal or in a metallic alloy, for instance an aluminum alloy. The radiative surface may be a coating of the thermally conductive body, for instance white paint, an optical solar reflector, etc.

In embodiments, the radiator 10 may form a structural panel of the spacecraft, having an outer skin oriented towards outer space and an inner skin oriented towards the inside of the spacecraft. The structural panel may further comprise an internal structure supporting the inner and outer skins, for instance a honeycomb structure. The inner and outer skin may for instance comprise a layer of metal or metallic alloy, for instance an aluminum alloy. In this case, the radiative surface 12 of the radiator 10 corresponds to the outer skin of the structural panel. In other embodiments, the radiator 10 may be an appendix of the spacecraft that is either in fixed position, or deployable, relative to the spacecraft's structure.

The system 1 for thermal regulation further comprises at least one diphasic duct 13 extending along the body 11 of the radiator, in thermal contact with said body, so as to transfer heat to the radiative surface 12. In embodiments, the system comprises a plurality of diphasic ducts 13, which may be independent, i.e. devoid of any fluid connection between them.

A diphasic duct could be, for example, in the form of heat pipe or a loop heat pipe. A diphasic duct is for example a conduit having an interactive flow of two distinct phases (gas and liquid) with common interfaces. A diphasic duct is notably a section of tube or piping which contains or facilitates the transfer of fluid and/or Gas. A heat pipe is for example a diphasic duct having a hot source and a cold source and counter flows of gas and liquid phases. A heat pipe is notably a tube which is used to encourage the transport heat between two locations, usually with (but not restricted to) an internal fluid and/or gas.

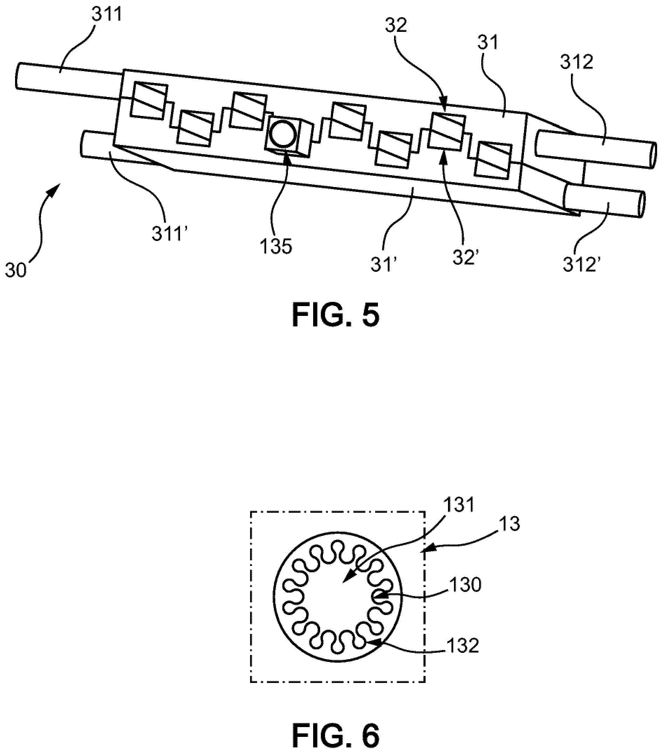

As shown schematically in figure 6, representing an example of a transverse cross-section of a diphasic duct 13, each diphasic duct may comprise an internal cavity 130 comprising a diphasic fluid in a liquid-vapor equilibrium. The internal cavity may comprise at least one internal canal 131 for the circulation of the fluid in vapor phase and a capillary structure 132 enabling the circulation of fluid in liquid phase.

The diphasic ducts 13 may either be embedded within the body 11 of the radiator, in thermal contact with the radiative surface, or mounted on the radiative surface 12.

Back to figure 2a, the system 1 for thermal regulation of the spacecraft further comprises a cooling fluid circuit 20 extending between at least one heat-producing component C of the spacecraft and the radiator. As schematically shown in figure 2, the cooling fluid circuit 20 may comprise a pump 21 for circulating cooling fluid within the circuit. In preferred embodiments, the cooling fluid circuit is single phase, i.e. the cooling fluid being is in liquid state or in vapor state in the circuit, and does not undergo any phase change within the circuit. The cooling fluid may for instance be water (high purity deionized water), ammonia, gaseous helium, gaseous nitrogen, propylene, isopropyl alcohol, polypropylene glycol etc.

In embodiments, and as schematically shown in figure 2a, the system 1 for thermal regulation of the spacecraft may be redundant, i.e. it may comprise a pair of said single-phase cooling fluid circuits, arranged to receive heat from the same heat-producing component(s), the cooling fluid circuits being devoid of any fluid communication with one another.

The system 1 further comprises a heat exchange device 30, which is assembled to the radiator's body 11 and may be embedded within the radiator's body 11 or mounted on the radiative surface 12. The heat exchange device 30 comprising a casing 31, having an internal cavity 310 comprising input 311 and output ports 312 for connecting with the single-phase cooling circuit. In operation, the cooling fluid of the single-phase cooling circuit thus circulates within the cavity from an input port 311 to an output port 312 and is then circulated back towards the heat-producing components.

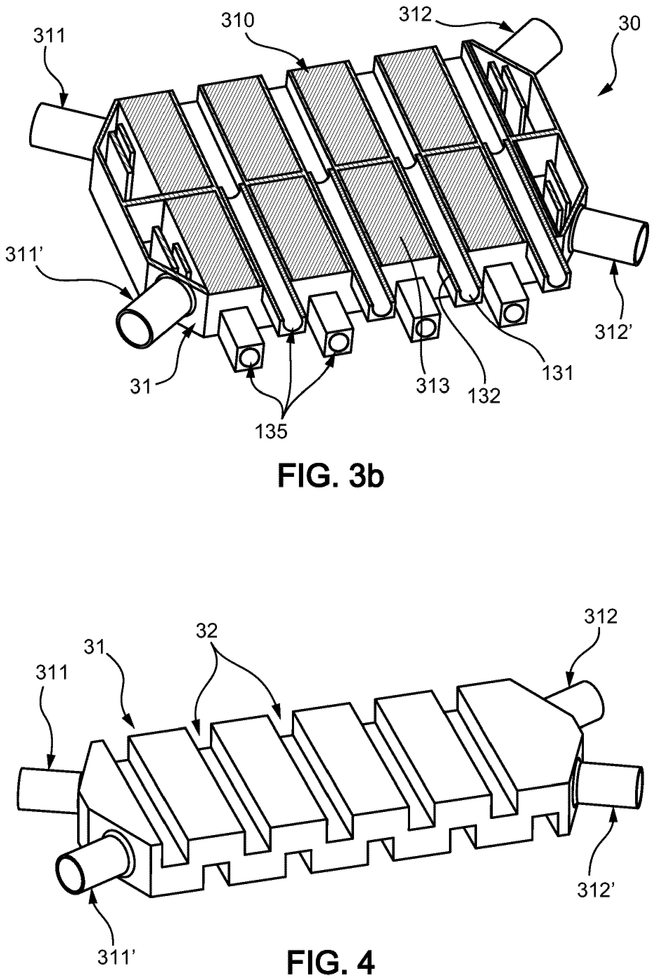

The casing 31 of the heat exchange device 30 also integrates a first section 135 of each diphasic duct 13, each first section 135 of diphasic duct being in thermal contact with the internal cavity 310 of the casing and hence with the cooling fluid circulating within the cavity. To this end, the casing 31 of the heat exchange device and each diphasic duct section 135 may be formed in a thermally conductive material, for instance in a metal or metallic alloy, for instance an aluminum alloy. Moreover, and as shown for instance in figure 3b, the internal cavity 310 of the casing may comprise an internal lattice, such as a plurality of internal fins 313 formed of a thermally conductive material. The internal lattice is disposed transversally to the direction of the cooling fluid. The cooling fluid thus circulates inside the cavity between the internal fins, which slows down the circulation of the cooling fluid and increases the thermal exchange surface between the fluid and the casing.

In embodiments, each diphasic duct 13 comprises at least one first section 135 integrated in the casing 31 of the heat exchange device, and at least one second section 136 extending from said casing, the first and second sections of a diphasic duct being assembled together. The first section 135 of each diphasic duct integrated in the casing of the heat exchange device may be an end portion of said diphasic duct. Each section 135, 136 thus comprises at least one internal canal for the circulation of fluid in vapor phase and a capillary structure for the circulation of fluid in liquid phase, and the sections 135, 136 are aligned to ensure communication of the vapor canals of the sections and of the capillary structures of the sections.

When the system comprises a plurality of independent diphasic ducts 13 extending along the body of the radiator, the heat exchange device 30 comprises a first section 135 of each diphasic duct 13, all of these sections being in thermal contact with the internal cavity 310. Thus, the heat exchange device 30 forms a single location for heat exchange between the cooling fluid circuit and the diphasic ducts distributed along the radiator's body, thereby enabling compact transfer of heat. Furthermore, in that case the risk caused by a micrometeoroid impact on a diphasic duct is limited by the ducts being all independent, since the diphasic duct can be damaged without causing failure to the other diphasic ducts of the regulation system.

When the system for thermal regulation is redundant, the casing 31 of the heat exchange device comprises one input port 311,311' and one output port 312, 312' respectively connected to each single-phase cooling circuit, and two internal cavities which are leak-tightly separated from each other. In that case, the surfaces of thermal exchange between a first diphasic duct section 135 and each one of the two cavities are preferably equal.

With reference to figure 2a, the operation of the thermal regulation system is thus as follows:
- the cooling fluid circulating within the cooling circuit heats up when collecting heat at the heat-producing component C and circulated towards the heat exchange device,
- at the internal cavity of the heat exchange device, the heat brought by the cooling fluid is transferred to first the diphasic duct sections 135 integrated to the casing, and the dual-phase fluid located inside the diphasic ducts is evaporated. Said first diphasic duct sections 135 thus form an evaporator section of the diphasic ducts.
- the heat is then transferred to the radiative surface of the radiator and radiated towards space, via the second diphasic duct sections extending along the radiator's body. The fluid in vapor state of the diphasic ducts is condensed, and thus said second diphasic duct sections form condenser sections of the diphasic ducts.
- The cooling fluid of the single-phase cooling circuit exits the heat exchange device at a lower temperature and is then circulated back towards the heat-producing component.

The first diphasic ducts sections 135 integrated in the casing of the heat exchange device may extend parallel to one another, and may be arranged in one plane, or in a plurality of superposed planes.

The second diphasic ducts sections 136 extending from the heat exchange device, along the radiator's body, may be disposed in order to maximize heat exchange between the diphasic ducts and the radiator's body. For instance, they may extend parallel to the radiative surface, and in different directions from the heat exchange device.

According to a first non-limiting example shown in figure 2a, the heat exchange device may be located at a position neighboring an edge of the radiator, and the diphasic ducts 13 may extend from the heat exchange device 30 in a comb-like manner, where each second section 136 of a diphasic duct extending from the heat exchange device 30 optionally comprises a portion 137 extending from the heat exchange device, parallel to said edge, and a portion 138 perpendicular to said edge and extending towards opposite edge of the radiator.

According to another non-limiting example shown in figure 2b, the heat exchange device may be located at a center of the radiator, and the diphasic ducts may extend in in all directions around the heat exchange device.

In embodiments, for instance when the heat exchange device and the diphasic ducts are integrated within the radiator's body, the second sections of the diphasic ducts extending away from the heat exchange device may be arranged in a plurality of parallel planes, for instance a plurality of planes parallel to the radiative surface.

With reference to figures 3a to 5, the first diphasic ducts sections 135 integrated to the casing 31 of the heat exchange device 30 may extend transversally to the direction of the internal cavity 310, said direction being defined by the direction of an axis extending between the input port 311 by which the cooling fluid enters the cavity and the output port 312 by which the cooling fluid exits the cavity. Moreover, in order to increase the heat exchange surface between the diphasic duct sections and the internal cavity, the cavity 310 may be shaped to circulate around at least part of the circumference of each duct section 135, for instance around at least 90° of circumference of each duct section. In embodiments, the first diphasic duct sections 135 may extend in parallel and be arranged in two parallel planes, with the diphasic duct sections of one plane being offset relative to the diphasic duct sections of the next plane, and the cavity 310 may be arranged to circulate between two adjacent planes of duct sections in order to alternatively circulate along each diphasic duct section.

With reference to figures 3a and 3b is shown an example of a casing 31 of a heat exchange device 30 according to a first embodiment, in which the casing 31 of the heat exchange device and the first diphasic duct sections 135 integrated to this device are formed as a single piece, manufactured by additive manufacturing. Each first diphasic duct section is assembled to a corresponding second section 136 for instance by welding, brazing, or by a shape-memory fitting extending around the sections and maintaining the ends of each section in contact with one another. In order to ease assembly of two sections of a diphasic duct, the first diphasic duct sections 135 may protrude from the walls of the casing delimiting the internal cavity.

With reference to figure 4 is shown an example of a casing 31 according to another embodiment, in which the casing 31 comprises a plurality of open grooves 32 configured to receive each a corresponding first diphasic duct section. The open grooves may thus have the same shape as the diphasic duct section, and internal dimensions corresponding to the external dimensions of a diphasic duct section. By "open groove", it is meant that the groove is open either on one extremity, in order to enable insertion of the diphasic duct section 135 longitudinally by said extremity, or on one side, in order to enable insertion of the diphasic duct section laterally. In this latter case the groove may be denoted as "laterally open". In the example shown in figure 4, the open grooves 32 have a square cross section corresponding to the outer cross section of the diphasic duct sections but ducts with circular cross-section could also be integrated, and each groove is open on one side of the square cross section. According to another example not shown, the open grooves may have a semi-circular cross section, enabling insertion of diphasic duct sections of circular outer cross section. The assembly of the diphasic duct sections to the casing can be made by thermal glue, welding or brazing.

According to still another embodiment, an example of which is shown in figure 5, the heat exchange device 30 comprises two casings 31, 31', each comprising a plurality of laterally open grooves 32, 32' and the casings being assembled together with the open grooves 32 of each casing facing the open grooves 32' of the other casing. Each laterally open groove may correspond to half the cross-section of a diphasic duct section. Accordingly, a first diphasic duct section 135 may be placed in a groove formed jointly by the facing open grooves of the assembled casings. The open grooves of the casing are also open at one extremity to enable the assembly of the first section 135 to the second section 136 of the diphasic duct.

In the example shown in figure 5, this embodiment is applied to a redundant thermal regulation system, and each casing comprises one internal cavity connected to a corresponding cooling fluid circuit via an input port 311, 311' and an output port 312,312'.

According to the second and third embodiments, the diphasic ducts 13 may be formed in one piece, with a first section 135 of each duct being inserted in a corresponding groove. Alternatively, the diphasic ducts 13 may be formed in two or more pieces, with one piece corresponding to the first section 135 that is inserted in a groove, and the other piece corresponding to the second section 136 that extends along the radiator's body 11. In that case, the assembly of the sections may be performed by welding, brazing, or by a shape-memory alloy fitting.

### List of the numerical references:

- R: Radiator (prior art)
- L: Cooling line (prior art)
- C: Heat-producing component
- S: Spacecraft
- 1: System for thermal regulation of the spacecraft
- 10: Radiator
- 11: Radiator's body
- 12: Radiative surface
- 13: Diphasic ducts
- 130: Internal cavity of a diphasic duct
- 131: vapor canal
- 132: capillary structure
- 135: first diphasic duct section
- 136: second diphasic duct section
- 137: diphasic duct portion parallel to a radiator's edge,
- 138: diphasic duct portion perpendicular to a radiator's edge,
- 20: fluid circuit
- 21: pump
- 30: Heat exchange device
- 31: Casing of the heat exchange device
- 310: internal cavity of the casing
- 311: input port
- 312: output port
- 313: internal fins of the cavity
- 32: open groove

## Claims

1. A system (1) for thermal regulation of a spacecraft (S), comprising:
- a hot source (C) interface,
- a radiator (10) having a thermally conductive body (11) comprising at least one radiative surface (12),
- two separate single-phase cooling fluid circuits (20) arranged in or on said hot source interface, each single-phase cooling circuit comprising a pump for activating the circulation of the single-phase cooling fluid,
the system (1) further comprising a heat exchange device (30) arranged in or on the body (11) of the radiator, the heat exchange device comprising a casing (31) comprising at least two internal cavities (310, 310") each having input (311, 311') and output ports (312, 312') for separately connecting each of said single-phase cooling fluid circuits to the heat exchange device,
and wherein the heat exchange device (30) comprises a plurality of thermal interfaces with a plurality of diphasic ducts (13), the diphasic ducts being separate from each other and separate from the single-phase cooling fluid circuits (20), the diphasic ducts (13) being arranged around the heat exchange device (30), each diphasic duct extending at least from a first section (135) of said diphasic duct to a second section (136) of said diphasic duct, said first (135) section being arranged on one of said thermal interfaces of the heat exchange device and said second section (136) of said diphasic duct being arranged in or on said body of said radiator (10), the second sections of the diphasic ducts extending around the heat exchange device.

2. The system (1) according to claim 1, wherein the first section (135) of each diphasic duct extends along a direction transverse to the direction of said single-phase cooling fluid circuit in the internal cavities (310, 310') and the internal cavities are shaped such that the cooling fluid circulating within the cavities circulates around at least part of the circumference of each duct section (135).

3. The system (1) according to claim 1 or 2, wherein the first sections (135) of the diphasic ducts comprise at least two superposed layers of first duct sections, wherein the first duct sections of a layer are offset relative to the duct sections of an adjacent layer, and the internal cavities (310) circulate between the first duct sections of two adjacent layers.

4. The system (1) according to any of the preceding claims, wherein the first diphasic ducts sections (135) parallel to each other, and the second duct sections (136) extend in different directions in a plane parallel to the radiative surface.

5. A system (1) for thermal regulation of a spacecraft according to any of the preceding claims, wherein each of said internal cavities comprises an internal lattice structure disposed transversally to an internal circuit joining said input and output ports and linked to said thermal interfaces.

6. The system (1) according to claim 5, wherein the internal cavities (310, 310') is formed by walls of a thermally conductive material, and the internal lattice is formed of a thermally conductive material.

7. The system (1) according to any of the preceding claims, wherein the first diphasic duct section (135) of each diphasic duct (13) forms an end of the diphasic duct.

8. The system (1) according to any of the preceding claims, wherein the casing (31) comprising the cavities (310) and the first diphasic duct sections (135) is formed as a single piece manufactured by additive manufacturing, and each first duct section is assembled to a second duct section (136) extending from the casing.

9. The system (1) according to the preceding claim, wherein each first diphasic dust section protrudes from a wall of the casing (31) delimiting the internal cavities (310, 310'), and is assembled to a second diphasic duct section in order to form a respective diphasic duct (13), said assembly being achieved by welding, brazing, or by a shape-memory fitting.

10. The system (1) according to any of claims 1 to 6, wherein the casing (31) comprises a plurality of open grooves (32) configured to receive a corresponding first diphasic duct section (135).

11. The system (1) according to claim 10 wherein each first diphasic duct section (135) is inserted in a corresponding open groove (32) and assembled to it by thermal glue, welding or brazing.

12. The system (1) according to any of the preceding claims wherein each first diphasic duct section (135) has the same thermal exchange surface with both internal cavities.

13. The system (1) according any of the preceding claims, comprising two casings (31, 31') each comprising one of the internal cavities, each casing (31, 31') comprising a plurality of open grooves (32) configured each to receive a corresponding first diphasic duct section (135), and the two casings (31, 31') are assembled together with the open grooves of a casing facing the open grooves of the other casing.

14. The system (1) according to any of the preceding claims, wherein each diphasic duct (13) comprises at least one internal canal (131) for vapor circulation and a capillary structure (132) for liquid circulation.

15. A spacecraft (S) comprising at least one heat-producing component (C) and a system (1) for thermal regulation according to any of claims 1 to 14.

## Patentansprüche

1. System (1) zur thermischen Regelung eines Raumfahrzeugs (S), aufweisend:
- eine Schnittstelle für eine Wärmequelle (C),
- einen Radiator (10), der einen thermisch leitfähigen Körper (11) mit mindestens einer strahlenden Oberfläche (12) hat,
- zwei separate Einphasen-Kühlfluid-Kreisläufe (20), die in oder an der Wärmequelle-Schnittstelle angeordnet sind, wobei jeder Einphasen-Kühl-Kreislauf eine Pumpe zum Aktivieren der Zirkulation des Einphasen-Kühlfluids aufweist,
wobei das System (1) ferner eine Wärmetauschvorrichtung (30) aufweist, die in oder an dem Körper (11) des Radiators angeordnet ist, wobei die Wärmetauschvorrichtung ein Gehäuse (31) mit mindestens zwei inneren Hohlräumen (310, 310") aufweist, die jeweils Eingangs- (311, 311') und Ausgangsanschlüsse (312, 312') zum separaten Verbinden jedes der Einphasen-Kühlfluid-Kreisläufe mit der Wärmetauschvorrichtung aufweisen,
und wobei die Wärmetauschvorrichtung (30) mehrere thermische Schnittstellen mit mehreren zweiphasigen Leitungen (13) aufweist, die zweiphasigen Leitungen separat voneinander und von den Einphasen-Kühlfluid-Kreisläufen (20) sind, die zweiphasigen Leitungen (13) um die Wärmetauschvorrichtung (30) herum angeordnet sind, jede zweiphasige Leitung sich zumindest von einem ersten Abschnitt (135) der zweiphasigen Leitung zu einem zweiten Abschnitt (136) der zweiphasigen Leitung erstreckt, der erste (135) Abschnitt an einer der thermischen Schnittstellen der Wärmetauschvorrichtung angeordnet ist und der zweite Abschnitt (136) der zweiphasigen Leitung in oder an dem Körper des Radiators (10) angeordnet ist, die zweiten Abschnitte der zweiphasigen Leitungen sich um die Wärmetauschvorrichtung herum erstrecken.

2. System (1) nach Anspruch 1, wobei der erste Abschnitt (135) jeder zweiphasigen Leitung sich entlang einer Richtung erstreckt, die transversal zu der Richtung des Einphasen-Kühlfluid-Kreislaufs in den inneren Hohlräumen (310, 310') ist, und die inneren Hohlräume derart geformt sind, dass das in den Hohlräumen zirkulierende Kühlfluid um mindestens einen Teil des Umfangs jedes Leitungsabschnitts (135) zirkuliert.

3. System (1) nach Anspruch 1 oder 2, wobei die ersten Abschnitte (135) der zweiphasigen Leitungen mindestens zwei übereinander liegende Schichten der ersten Leitungsabschnitte aufweisen, wobei die ersten Leitungsabschnitte einer Schicht relativ zu den Leitungsabschnitten einer benachbarten Schicht versetzt sind, und die inneren Hohlräume (310) zwischen den ersten Leitungsabschnitten zweier benachbarter Schichten zirkulieren.

4. System (1) nach einem der vorstehenden Ansprüche, wobei sich die ersten zweiphasigen Leitungsabschnitte (135) parallel zueinander erstrecken und die zweiten Leitungsabschnitte (136) sich in unterschiedliche Richtungen in einer zu der strahlenden Oberfläche parallelen Ebene erstrecken.

5. System (1) zur thermischen Regelung eines Raumfahrzeugs nach einem der vorstehenden Ansprüche, wobei jeder der inneren Hohlräume eine innere Gitterstruktur aufweist, die transversal zu einem inneren Kreislauf, der die Eingangs- und Ausgangsanschlüsse miteinander verbindet, angeordnet ist und mit den thermischen Schnittstellen verbunden ist.

6. System (1) nach Anspruch 5, wobei die inneren Hohlräume (310, 310') von Wänden aus einem thermisch leitfähigen Material gebildet sind und das innere Gitter aus einem thermisch leitfähigen Material besteht.

7. System (1) nach einem der vorstehenden Ansprüche, wobei der erste zweiphasige Leitungsabschnitt (135) jeder zweiphasigen Leitung (13) ein Ende der zweiphasigen Leitung bildet.

8. System (1) nach einem der vorstehenden Ansprüche, wobei das Gehäuse (31), das die Hohlräume (310) und die ersten zweiphasigen Leitungsabschnitte (135) aufweist, als ein mittels additiver Fertigung gefertigtes einziges Stück gebildet ist, und jeder erste Leitungsabschnitt an einem zweiten Leitungsabschnitt (136), der sich von dem Gehäuse erstreckt, angefügt ist.

9. System (1) nach dem vorstehenden Anspruch, wobei jeder erste zweiphasige Leitungsabschnitt aus einer die inneren Hohlräume (310, 310') begrenzenden Wand des Gehäuses (31) vorspringt und an einem zweiten zweiphasigen Leitungsabschnitt angefügt ist, um eine jeweilige zweiphasige Leitung (13) zu bilden, wobei das Anfügen durch Schweißen, Löten oder Formgedächtnis-Einpassung erfolgt ist.

10. System (1) nach einem der Ansprüche 1 bis 6, wobei das Gehäuse (31) mehrere offene Rillen (32) aufweist, die konfiguriert sind, um einen entsprechenden ersten zweiphasigen Leitungsabschnitt (135) aufzunehmen.

11. System (1) nach Anspruch 10, wobei jeder erste zweiphasige Leitungsabschnitt (135) in eine entsprechende offene Rille (32) eingesetzt und durch thermischen Kleber, Schweißen oder Löten daran angefügt ist.

12. System (1) nach einem der vorstehenden Ansprüche, wobei jeder erste zweiphasige Leitungsabschnitt (135) die gleiche Wärmetauschfläche mit beiden inneren Hohlräumen hat.

13. System (1) nach einem der vorstehenden Ansprüche, aufweisend zwei Gehäuse (31, 31'), von denen jedes einen der inneren Hohlräume aufweist, wobei jedes Gehäuse (31, 31') mehrere offene Rillen (32) aufweist, die konfiguriert sind, um einen entsprechenden ersten zweiphasigen Leitungsabschnitt (135) aufzunehmen, und die zwei Gehäuse (31, 31') derart zusammengefügt sind, dass die offenen Rillen eines Gehäuses den offenen Rillen des anderen Gehäuses zugewandt sind.

14. System (1) nach einem der vorstehenden Ansprüche, wobei jede zweiphasige Leitung (13) mindestens einen Innenkanal (131) für Dampfzirkulation und eine kapillare Struktur (132) für Flüssigkeitszirkulation aufweist.

15. Raumfahrzeug (S) aufweisend mindestens eine wärmeerzeugende Komponente (C) und ein System (1) zur thermischen Regelung nach einem der Ansprüche 1 bis 14.

## Revendications

1. Système (1) pour la régulation thermique d'un engin spatial (S), comprenant :
- une interface de source chaude (C),
- un radiateur (10) ayant un corps (11) thermoconducteur comprenant au moins une surface rayonnante (12),
- deux circuits de fluide de refroidissement monophasés (20) distincts agencés dans ou sur ladite interface de source chaude, chaque circuit de refroidissement monophasé comprenant une pompe pour activer la circulation du fluide de refroidissement monophasé,
le système (1) comprenant en outre un dispositif d'échange de chaleur (30) agencé dans ou sur le corps (11) du radiateur, le dispositif d'échange de chaleur comprenant un boîtier (31) comprenant au moins deux cavités internes (310, 310") ayant chacune des orifices d'entrée (311, 311') et des orifices de sortie (312, 312') pour relier séparément chacun desdits circuits de fluide de refroidissement monophasés au dispositif d'échange de chaleur,
et dans lequel le dispositif d'échange de chaleur (30) comprend une pluralité d'interfaces thermiques avec une pluralité de conduits diphasiques (13), les conduits diphasiques étant séparés les uns des autres et séparés des circuits de fluide de refroidissement monophasés (20), les conduits diphasiques (13) étant agencés autour du dispositif d'échange de chaleur (30), chaque conduit diphasique s'étendant au moins à partir d'une première section (135) dudit conduit diphasique jusqu'à une seconde section (136) dudit conduit diphasique, ladite première section (135) étant agencée sur une desdites interfaces thermiques du dispositif d'échange de chaleur et ladite seconde section (136) dudit conduit diphasique étant agencée dans ou sur ledit corps dudit radiateur (10), les secondes sections des conduits diphasiques s'étendant autour du dispositif d'échange de chaleur.

2. Système (1) selon la revendication 1, dans lequel la première section (135) de chaque conduit diphasique s'étend le long d'une direction transversale par rapport à la direction dudit circuit de fluide de refroidissement monophasé dans les cavités internes (310, 310') et les cavités internes sont façonnées de telle sorte que le fluide de refroidissement circulant dans les cavités circule autour d'au moins une partie de la circonférence de chaque section (135) de conduit.

3. Système (1) selon la revendication 1 ou 2, dans lequel les premières sections (135) des conduits diphasiques comprennent au moins deux couches superposées de premières sections de conduits, dans lequel les premières sections de conduits d'une couche sont décalées relativement aux sections de conduits d'une couche adjacente, et les cavités internes (310) circulent entre les premières sections de conduits de deux couches adjacentes.

4. Système (1) selon l'une quelconque des revendications précédentes, dans lequel les premières sections (135) de conduits diphasiques parallèles les unes aux autres, et les secondes sections (136) de conduits s'étendent dans des directions différentes dans un plan parallèle à la surface rayonnante.

5. Système (1) pour la régulation thermique d'un engin spatial selon l'une quelconque des revendications précédentes, dans lequel chacune desdites cavités internes comprend une structure en treillis interne disposée transversalement par rapport à un circuit interne joignant lesdits orifices d'entrée et de sortie et lié auxdites interfaces thermiques.

6. Système (1) selon la revendication 5, dans lequel les cavités internes (310, 310') sont formées par des parois d'un matériau thermoconducteur, et le treillis interne est formé d'un matériau thermoconducteur.

7. Système (1) selon l'une quelconque des revendications précédentes, dans lequel la première section (135) de conduit diphasique de chaque conduit diphasique (13) forme une extrémité du conduit diphasique.

8. Système (1) selon l'une quelconque des revendications précédentes, dans lequel le boîtier (31) comprenant les cavités (310) et les premières sections (135) de conduits diphasiques est formé comme une seule pièce fabriquée par fabrication additive, et chaque première section de conduit est assemblée avec une seconde section (136) de conduit s'étendant à partir du boîtier.

9. Système (1) selon la revendication précédente, dans lequel chaque première section de conduit diphasique fait saillie à partir d'une paroi du boîtier (31) délimitant les cavités internes (310, 310'), et est assemblée avec une seconde section de conduit diphasique afin de former un conduit diphasique (13) respectif, ledit assemblage étant obtenu par soudage, brasage, ou par un ajustement à mémoire de forme.

10. Système (1) selon l'une quelconque des revendications 1 à 6, dans lequel le boîtier (31) comprend une pluralité de rainures ouvertes (32) configurées pour recevoir une première section (135) de conduit diphasique correspondante.

11. Système (1) selon la revendication 10, dans lequel chaque première section (135) de conduit diphasique est insérée dans une rainure ouverte (32) correspondante et assemblée avec elle par colle thermique, soudage ou brasage.

12. Système (1) selon l'une quelconque des revendications précédentes, dans lequel chaque première section (135) de conduit diphasique a la même surface d'échange thermique avec les deux cavités internes.

13. Système (1) selon l'une quelconque des revendications précédentes, comprenant deux boîtiers (31, 31') comprenant chacun une des cavités internes, chaque boîtier (31, 31') comprenant une pluralité de rainures ouvertes (32) configurées chacune pour recevoir une première section (135) de conduit diphasique correspondante, et les deux boîtiers (31, 31') sont assemblés conjointement avec les rainures ouvertes d'un boîtier faisant face aux rainures ouvertes de l'autre boîtier.

14. Système (1) selon l'une quelconque des revendications précédentes, dans lequel chaque conduit diphasique (13) comprend au moins un canal interne (131) pour la circulation de vapeur et une structure capillaire (132) pour la circulation de liquide.

15. Engin spatial (S) comprenant au moins un élément de production de chaleur (C) et un système (1) pour la régulation thermique selon l'une quelconque des revendications 1 à 14.
